# DEMANDE DE BREVET EUROPEEN

(11) **EP 0 596 174 A1**
(43) Date de publication de la demande: **11.05.1994**
(21) Numéro de dépôt: 92440122.7
(22) Date de dépôt: 02.11.1992
(51) Int. Cl.: B60S 3/04

(54) **Dispositif de distribution séquentielle de produits liquides**

(71) Demandeur: HRD, F-67720 Hoerdt (FR)
(72) Inventeur: Kormann, Robert, F-67800 Hoenheim (FR)
(74) Mandataire: Bossard, Jacques-René

(57) **Abrégé**

Dispositif de distribution séquentielle de plusieurs produits liquides correspondant aux différentes phases d'un cycle complet de lavage de véhicules, installé dans une station de lavage à jet sous haute pression pour automobiles, relié d'une part à une lance à haute pression avec laquelle l'utilisateur procède au lavage, au rinçage et au lustrage, et d'autre part à des conduits (1, 1', 1") véhiculant les liquides à distribuer, caractérisé en ce qu'il comprend autant de circuits hydrauliques indépendants dotés chacun d'un groupe motopompe (8, 8', 8") qu'il y a de phases de distribution de produits liquides dans un cycle, et alimentant chacun à son tour la lance de lavage L.

## Description

La présente invention se rapporte au domaine des stations de lavage de véhicules automobiles accessibles en self service et fonctionnant suivant la technique du lavage à jet sous haute pression.

Chaque cycle de lavage, déclenché par exemple par l'introduction d'une pièce de monnaie, comprend plusieurs phases distinctes s'expliquant par l'utilisation de liquides de compositions et/ou températures différentes selon la fonction assignée à la phase.

Ainsi le liquide employé comprend du détergent et est chauffé lors d'une phase de lavage, alors qu'il ne s'agit que d'eau froide pour un rinçage et ...

Compte tenu de ces différents liquides de traitement utilisés, et bien que tous aient en définitive à passer par la lance tenue à la main par l'utilisateur, on comprend qu'il y a nécessairement plusieurs circuits hydrauliques convergeant en un endroit.

On trouve actuellement plusieurs configurations différentes de ces circuits dans les stations de lavage en fonctionnement, basées sur des choix de matériels et/ou des conceptions assez diverses.

Les configurations les plus répandues comprennent des rampes d'électrovannes reliées en amont aux produits liquides à distribuer et en aval aux moto-pompes de distribution. Chaque piste de lavage se voit attribuer son propre jeu d'électrovannes, dont le nombre correspond au nombre de produits liquides qui serviront à asperger le véhicule au cours d'un cycle de lavage complet.

Dans ces systèmes à rampes d'électrovannes, les variantes se situent en fait plutôt dans les moyens de stockage intermédiaires des produits liquides. Selon le cas, il peut y avoir un ou plusieurs petits réservoirs en amont d'au moins une des électrovannes correspondantes, ou au moins un grand bac de liquide dans lequel on réalise à l'avance le mélange avec le produit concentré assurant la fonction recherchée. Dans tous les cas, il n'y a qu'un seul groupe motopompe par piste de lavage, auquel est donc relié un nombre d'électrovannes correspondant en réalité aux fonctionnalités d'un cycle.

Selon une autre configuration de l'art antérieur, le mélange destiné au lavage n'est pas préparé à l'avance dans un bac de grand volume, mais fabriqué au moment de la phase de lavage du cycle. Il n'y a donc qu'un petit réservoir muni d'un système de vérification du niveau de liquide, dont l'alimentation en produit détergent peut être asservie audit niveau.

Dans ce système, il y a trois voies, la première véhiculant du liquide de lavage chaud réalisé à partir d'eau chaude adoucie mélangée avec du détergent pulvérulent, la seconde et la troisième véhiculant respectivement de l'eau ordinaire et de l'eau déminéralisée. Chaque voie est commandée par deux électrovannes, à savoir une électrovanne principale, déterminant l'envoi d'un débit élevé à une pompe haute pression alimentant la lance, et une électrovanne pilote à débit réduit, destinée à assurer la souplesse et le progressivité de l'ouver- ture/fermeture de ladite électrovanne principale.

Une installation de mise hors-gel placée en parallèle nécessite également l'emploi d'une électrovanne dont la mise en oeuvre dépend notamment des conditions extérieures d'utilisation de la station.

Toutes les configurations de l'art antérieur décrites ci-dessus sont bien entendu valables, et elles fonctionnent d'ailleurs sur de nombreux sites. Toutefois, elles présentent encore un certain nombre d'inconvénients qui s'avèrent pénalisants, notamment pour des raisons liées à la maintenance.

En effet, la caractéristique majeure de tous ces dispositifs, comme on l'a vu, est l'utilisation généralisée d'électrovannes pour commander l'accès des liquides aux groupes motopompes. Or il s'agit d'un composant relativement fragile, et l'expérience montre qu'un fort pourcentage des réparations à pratiquer dans les stations de lavage est dû à des problèmes d'électrovannes.

En outre, ce type de réparations exige un personnel très spécialisé, compte tenu des difficultés techniques que l'on peut rencontrer. Lorsque le parc des stations est largement disséminé sur un vaste territoire, on mesure sans peine les problèmes de maintenance rencontrés par la maison mère.

Les circuits hydrauliques étant en outre complexes du fait des nombreuses interconnexions, il se crée d'autres points de fragilité qui diminuent d'autant la solidité globale du système, et nécessitent aussi de nombreuses interventions de dépannage sur site.

Cette complexité entraîne l'utilisation d'un certain nombre de pièces d'une grande précision, dont le prix de revient est élevé et dont la manipulation peut s'avérer délicate au montage comme à la maintenance, et ne peut être confiée à des personnels non spécialisés.

Enfin, l'utilisation d'un seul groupe motopompe par piste y implique le passage de plusieurs types de liquides à des températures différentes. La pompe subit à chaque changement de température un choc thermique dont la succession finit par abaisser sa durée de vie.

Les différences de température sur une même pompe au cours des diverses phases ont une autre incidence très désavantageuse. Elles créent une condensation sur le carter. Or celui-ci comprend des orifices destinés à injecter de l'huile, et qui collectent en réalité l'eau de condensation, affectant bien entendu le fonctionnement des pompes.

A chaque changement de circuit, la pompe subit en outre un choc mécanique : or, si elle est montée de manière à absorber les vibrations et les chocs, il n'en va pas de même pour les autres parties du circuit, et en particulier la rampe d'électrovannes, qui est fixe. Il y a par conséquent une tension permanente entre la partie fixe et le groupe motopompe mobile. Compte tenu des nombreux raccords dans les tuyauteries, et des pressions mises en oeuvre, les problèmes ne sont donc pas rares au niveau desdits raccords.

La présente invention remédie à ces inconvénients en présentant un système qui simplifie considérablement les circuits hydrauliques et augmente du même coup sensiblement la fiabilité de l'ensemble.

Il s'agit également d'un dispositif de distribution séquentielle des produits liquides correspondant aux différentes phases du cycle de lavage des véhicules dans de telles stations, installé à raison d'un par piste, et relié d'une part à la lance à haute pression tenue par l'utilisateur, et d'autre part aux conduits véhiculant les produits à traiter et à distribuer.

La caractéristique principale de l'invention est que le dispositif comprend autant de circuits hydrauliques indépendants munis chacun d'un groupe motopompe qu'il y a de phases de distribution de produits liquides dans un cycle de lavage complet, et alimentant chacun à son tour ladite lance de lavage.

En d'autres termes, au lieu de procéder par des jeux d'électrovannes chargées de sélectionner le produit liquide à envoyer vers le groupe motopompe, on supprime purement et simplement ces électrovannes de sélection et on inclut un groupe motopompe par voie.

On supprime donc d'une part l'étage particulièrement fragile du dispositif et on simplifie d'autre part considérablement le tracé des circuits, qui deviennent à peu près identiques entre eux et beaucoup plus simples. Cette simplification a notamment pour conséquence une diminution du nombre des raccords, et par suite du nombre des zones considérées comme moins sûres.

Enfin, chaque circuit véhicule de l'eau qui est toujours sensiblement à la même température et les chocs thermiques sont ainsi évités. De même, compte tenu des durées respectives des différentes phases du cycle, les chocs mécaniques tels que les coups de bélier dans les conduites sont moins fréquents et plus faciles à contrôler.

L'absence de variations de température a également l'incidence suivante : dans le circuit de lavage, le chauffage est plus rapide puisqu'il n'y a pas eu de refroidissement provoqué par les autres phases. Il n'y a plus de condensation non plus dans cette pompe, et cela participe à l'augmentation de sa durée de vie.

Selon une configuration possible du dispositif de l'invention, chaque circuit hydraulique indépendant comprend essentiellement une conduite d'amenée du liquide de base à traiter, débouchant dans un bac de traitement dont la conduite d'évacuation est reliée au groupe motopompe, lequel envoie le liquide sous pression vers la sortie haute pression commune à tous les circuits hydrauliques.

En outre, à des fins de contrôle, les bacs peuvent être munis de moyens de contrôle du niveau du liquide qu'ils contiennent, et à la sortie des groupes motopompes, on installe des moyens de réguler et/ou de contrôler la pression.

En sus des avantages que l'on vient d'évoquer, le nouveau système est plus efficace, puisqu'il permet de régler la pression de sortie du jet en fonction de la phase dans laquelle on se trouve. Selon un exemple de valeurs utilisées, le lavage s'effectue à 100 bars, le rinçage à 110 bars alors que la dernière opération de lustrage à l'eau déminéralisée n'est réalisée qu'à 60 bars.

Cette dernière opération ne nécessite pas la même pression que les précédentes, puisqu'elle a lieu après un rinçage à jet dont la pression doit par contre être supérieure à celle du lavage pour enlever l'eau savonneuse des carrosseries. L'indépendance des circuits hydrauliques permet donc une optimisation des mises en oeuvre, et, accessoirement, une économie d'énergie dans la mesure où il n'est plus nécessaire d'effectuer toutes les phases à forte pression. Cette économie d'énergie s'accompagne d'ailleurs d'une économie en eau déminéralisée, laquelle est la plus onéreuse, du fait du moindre débit utilisé pour le lustrage. Globalement tout concourt donc à un abaissement des coûts d'utilisation.

Le dispositif de l'invention élimine également un autre inconvénient gênant du système mono- pompe : lorsque l'utilisateur change de phase au cours du programme, du liquide de traitement correspondant à la phase précédente et retenu par exemple dans le dispositif anti-bélier est rejeté par la lance de nettoyage. Ce rejet intempestif diminue en fait la phase suivante et fausse du même coup les durées prévues par l'utilisateur. Ainsi, lorsque la durée de rinçage est amputée d'une fraction pendant laquelle la lance projette de l'eau savonneuse, il arrive que le rinçage ne soit pas réalisé correctement en fin de cycle. Cet inconvénient est supprimé grâce à une autre caractéristique de l'invention, selon laquelle le ballon anti-bélier est situé en un point du circuit d'eau déminéralisée, aussi éloigné que possible du circuit d'eau de lavage chargée de détergent. De cette manière ce ballon est pratiquement toujours rempli d'eau non savonneuse. En outre le volume de ce ballon est ramené au tiers du volume du ballon anti-bélier monté dans les systèmes antérieurs.

En somme, le dispositif de l'invention combine une plus grande simplicité et une efficacité accrue. La maintenance peut alors être effectuée par un dépanneur occasionnel, et il n'est plus nécessaire d'envoyer un dépanneur hautement spécialisé à l'autre bout du territoire pour n'importe quel dysfonctionnement, même relativement banal.

La fiabilité dépend également de la solidité de l'ensemble, qui est aussi améliorée : les démarrages et redémarrages sont trois fois moins fréquents pour chaque groupe motopompe, d'où une usure et une fatigue beaucoup plus réduites. Globalement, le fonctionnement du dispositif se fait beaucoup plus en souplesse, et les pompes ne peinent pas aux changements de position comme cela se produisait dans les systèmes antérieurs. Dans le même ordre d'idée, les vidanges sont trois fois moins fréquentes, les durées de vie des matériels sont au moins trois fois plus longues, et ...

Le dispositif n'est donc pas seulement globalement fiable, il est aussi économiquement très avantageux par rapport à ses devanciers. Outre les raisons déjà citées, il est, au surplus, intéressant pour l'amortissement de l'investissement du matériel pompe, puisqu'il y a beaucoup moins d'échanges des têtes de pompes qu'auparavant.

On va maintenant le décrire plus en détail, en se référant pour cela aux figures jointes en annexe, pour lesquelles :
- La figure 1 représente un schéma des circuits hydrauliques constituant le système selon l'invention, et
- La figure 2 montre un agencement possible des trois groupes motopompes équipant ce système.

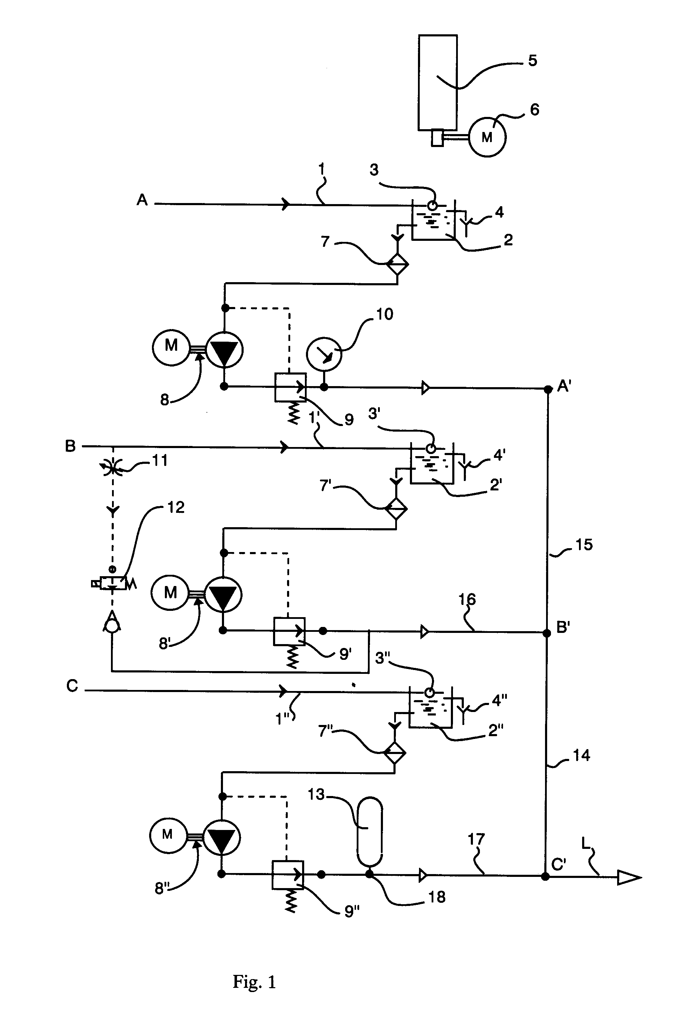

La figure 1 fait bien ressortir le parallélisme qui existe dans le circuit hydraulique entre les trois voies de cet exemple de configuration possible.

Dans chaque cas, on retrouve une tuyauterie (1, 1', 1") d'amenée du liquide de la voie correspondante. La voie A est dévolue au lavage, les voies B et C sont respectivement prévues pour le rinçage à l'eau ordinaire et le lustrage à l'eau déminéralisée.

Le liquide de base de la voie A est donc de l'eau chaude, à laquelle on rajoute un détergent, alors que le rinçage n'a besoin que d'eau ordinaire froide et qu'on prévoit de l'eau déminéralisée froide pour le lustrage, afin de supprimer toute trace sur l'automobile une fois le lavage terminé.

Dans les trois voies, des bacs (2, 2', 2") identiques, de volume réduit, permettent de gérer, voire de traiter le liquide avant de l'envoyer vers la lance L de l'utilisateur. Chacun est muni d'un système de contrôle du niveau (3, 3', 3"), par exemple à flotteur, et d'un trop-plein (4, 4', 4") chargé d'évacuer le liquide lorsque son volume dépasse la capacité du bac (2, 2', 2").

Dans la voie A, ce bac est surmonté d'un container (5) rempli de savon ou de détergent, ou plus généralement de tout agent lavant actif, sous forme pulvérulente, liquide ou autre ...

Ledit agent est mélangé à l'eau chaude aux périodes de lavage, et il n'y a donc pas de préparation du mélange à l'avance. Le volume du bac (2) ne le permettrait de toute manière pas. Le dosage est réalisé en temps réel par un moteur (6) qui actionne un dispositif de dosage classique par exemple à vis filetée et décompacteur tournants.

Les autres bacs (2', 2") n'effectuent pas de mélange. Ils sont tous reliés au groupe motopompes (8, 8', 8") va des filtres (7, 7', 7").

Bien entendu, chaque groupe motopompe est actionné indépendamment des autres, et sa mise en route dépend de la phase du cycle dans laquelle on se trouve, laquelle est commandée par l'utilisateur.

Les sorties des motopompes (8, 8', 8") sont raccordées en A', B', C' à la lance L projetant le liquide sous haute pression. Toutefois en amont des intersections A', B', C' des régulateurs de pression (9, 9', 9") permettent d'ajuster les jets en fonction de la phase en cours. Un manomètre unique (10) assure le contrôle de la pression à chaque instant dans la tuyauterie de sortie.

Selon une caractéristique connue en soi, le dispositif de l'invention comporte également un système de mise hors-gel, dont le principe est en fait de conserver une circulation d'eau très faible par grand froid, afin d'empêcher la prise du gel.

Ce circuit hors-gel comprend un régulateur (11) placé en série avec une électrovanne (12) (la dernière qui subsiste dans la conception de l'invention) qui commande la mise en oeuvre dudit circuit.

Enfin , il est prévu un ballon anti-bélier (13) situé en un point aussi éloigné que possible du circuit AA' de l'eau savonneuse, à savoir vers la sortie C' du circuit d'eau déminéralisée, la lance L étant elle-même raccordée en ce point C', et réunie par des liaisons 14 et 15 aux sorties B' et A' des circuits d'eau ordinaire et d'eau savonneuse. Il résulte de cette disposition que l'inconvénient, mentionné plus haut, du système anti-bélier des installations antérieures, et selon lequel de l'eau savonneuse pouvait être retenue dans le ballon anti-bélier et expulsée au lieu d'eau ordinaire au début de la phase de rinçage, est éliminé. En effet, dans la disposition selon l'invention, l'eau savonneuse envoyée dans la phase de lavage suit le parcours A' - 15 - B' - 14 - C' - L, en repoussant en B' l'eau ordinaire dans sa tuyauterie d'amenée 16, et en C' l'eau déminéralisée dans sa tuyauterie d'amenée 17 sur laquelle est piquée en 18 la conduite menant au ballon anti-bélier 13. Ledit ballon anti-bélier est donc gonflé d'eau déminéralisée ou ordinaire, et non savonneuse, et à l'issue de la phase de lavage, la lance recevra de l'eau ordinaire venant de B', avec de l'eau déminéralisée ou ordinaire venant du ballon 13. Outre l'élimination de l'inconvénient précité, au surplus, il est possible de ramener le volume du ballon à une taille plus petite, de l'ordre de 0,1 litre au lieu de 0,35 litre dans les systèmes antérieurs. De cette manière le volume d'eau déminéralisée perdu à chaque arrêt est réduit d'autant. On obtient donc un gain de 1 litre toutes les trois impulsions : c'est une économie considérable sur une large période de fonctionnement.

Les caractéristiques techniques des organes moteurs dépendent bien entendu des pressions choisies, des volumes de liquide à traiter, des débits, etc...

Selon un exemple illustratif, le moteur du circuit de lavage tourne à 900 t/min. et la pompe installée est une pompe en inox à clapets et à piston céramique, qui supporte le détergent et autres produits de lavage même à température élevée.

Pour ce qui concerne le circuit de rinçage, on peut prendre une pompe plus classique en laiton, sans clapets et à piston céramique, coupée à un moteur tournant à 1450 t/min.

Il est également possible d'utiliser trois pompes identiques.

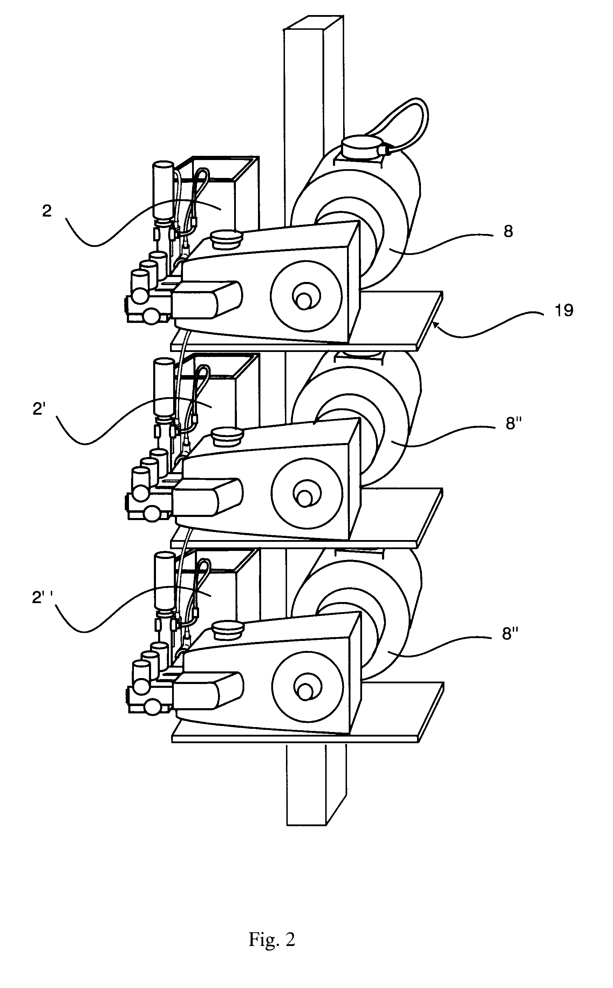

L'examen de la figure 2 montre que les 3 circuits précédents sont placés de préférence verticalement sur un support (19) du genre étagère : le volume occupé, bien que supérieur à certains systèmes mono-pompes, n'en reste pas moins raisonnable au regard de la totalité des installations de lavage d'une station.

Les trois groupes motopompes (8, 8', 8") sont donc placés exactement dans la même verticale.

Bien entendu, la configuration qui est décrite ci-dessus n'est qu'un exemple destiné à illustrer l'invention et ne peut être considérée comme exhaustive de ladite invention, qui comprend aussi les variantes possibles.

## Revendications

1. Dispositif de distribution séquentielle de plusieurs produits liquides correspondant aux différentes phases d'un cycle complet de lavage de véhicules, installé dans une station de lavage à jet sous haute pression pour automobiles, relié d'une part à une lance à haute pression avec laquelle l'utilisateur procède au lavage, au rinçage et au lustrage, et d'autre part à des conduits (1, 1', 1") véhiculant les liquides à distribuer, caractérisé en ce qu'il comprend autant de circuits hydrauliques indépendants dotés chacun d'un groupe motopompe (8, 8', 8") qu'il y a de phases de distribution de produits liquides dans un cycle, et alimentant chacun à son tour la lance de lavage L.

2. Dispositif de distribution séquentielle selon la revendication 1, caractérisé en ce que chaque circuit hydraulique comprend essentiellement une conduite (1, 1', 1") d'amenée du liquide de base débouchant dans un bac de traitement (2, 2', 2") dont la conduite d'évacuation est reliée au groupe motopompe (8, 8', 8"), qui l'envoie sous pression vers la sortie haute pression commune.

3. Dispositif de distribution séquentielle selon la revendication 2, caractérisé en ce que le bac (2, 2', 2") est muni de moyens de contrôle (3, 3', 3") du niveau du liquide qu'il contient.

4. Dispositif de distribution séquentielle selon l'une des revendications 2 et 3, caractérisé en ce que la sortie du groupe motopompe (8, 8', 8") est dotée de moyens de régulation et de contrôle de la pression (9, 9', 9", 10).

5. Dispositif selon l'une quelconque des revendications précédentes, caractérisé en ce qu'il comporte un ballon anti-bélier situé en un point aussi éloigné que possible du circuit d'eau savonneuse.

6. Dispositif selon la revendication 5, caractérisé en ce que ledit ballon anti-bélier est situé sur la conduite d'envoi sous pression d'eau déminéralisée.

7. Dispositif selon l'une quelconque des revendications précédentes, caractérisé en ce la lance est branchée sur la sortie commune des trois circuits en un point aussi éloigné que possible du circuit d'eau savonneuse.
